# EUROPÄISCHE PATENTSCHRIFT

(11) **EP 1 022 835 B1**
(45) Veröffentlichungstag und Bekanntmachung des Hinweises auf die Patenterteilung: **25.06.2003**
(21) Anmeldenummer: 99124696.8
(22) Anmeldetag: 11.12.1999
(51) Int. Cl.: H02G 3/32

(54) **Velours-Klebeband**
Velvet adhesive tape
Bande de velours adhésive

(30) Priorität: 20.01.1999 DE 29900924 U
(43) Veröffentlichungstag der Anmeldung: 26.07.2000
(73) Patentinhaber: Coroplast Fritz Müller GmbH & Co. KG, 42279 Wuppertal (DE)
(72) Erfinder: Söhngen, Marcus Dipl.-Wirth.-Ing., 42349 Wuppertal (DE)
(74) Vertreter: Patentanwälte Dr. Solf & Zapf

(56) Entgegenhaltungen:
- EP-A- 0 813 277
- DE-A- 3 343 779
- US-A- 5 503 927

## Beschreibung

Die Erfindung betrifft ein Velours-Klebeband zur Befestigung an einem komplementären Klettverschlußteil, insbesondere zum Bandagieren von langgestrecktem Gut, wie einem Kabelsatz für ein Automobil, mit einem bandförmigen textilen Träger, der auf seiner Oberseite klettfähige Schlaufen aufweist und auf auf dessen Unterseite eine Grundierungsschicht und auf der Grundierungsschicht eine selbstklebende Schicht aufgetragen ist.

In der Automobilindustrie ist es weithin noch gebräuchlich, daß Kabelsätze mit sogenannten Clips oder mit Heißschmelzklebern am Autoblech, z.B. an der Karosserie oder am Autohimmel, fixiert werden. Da diese Befestigungsarten aber bei der Kabelsatzverlegung sehr viel Arbeitszeit benötigen, ist man teilweise schon dazu übergegangen zu diesem Zweck Klettsysteme zu benutzen. Ein solches bekanntes System ist unter anderem in dem Patent DE 37 81 739 T2 beschrieben. Es besteht aus einem flexiblen, aus einem Polymer bestehenden Riemen, der mittels eines Haftklebers beispielsweise an der Feuerschutzwand eines Fahrzeugs befestigt werden kann und einen Klettverschluß aufweist, durch den die Riemenenden miteinander verbunden werden können.

Die Vorteile solcher Systeme bestehen vor allem in einer Zeitersparnis beim Einbau der Kabelsätze (Im Vergleich mit Clips- und Heißschmelzkleber-Befestigung können bis zu 25 Prozent der Montagezeiten eingespart werden.), im einfachen Einbau, bei dem vergleichsweise niedrigere Anforderungen an die Maßhaltigkeit gestellt werden, und in einer größeren Zahl von Verlegungsmöglichkeiten da die Klettsysteme auch an Stellen angebracht werden können, an denen die Befestigung von Clipsen nicht möglich ist. Durch die flexiblere Gestaltung der Verlegungswege der Kabelsätze kann Material und Arbeitszeit eingespart werden.

Zur Herstellung von Klettsystemen sind auch selbstklebende klettfähige Veloursbänder bekannt. Das komplementäre Klettverschlußteil kann dabei ein sogenanntes Hakenband sein, das in unterschiedlicher Ausführung - z.B. Haken, Harpunen oder Pilzköpfe als Komplementärelemente zu den Schlaufen - verwendet werden kann. Bei den bekannten Velours-Klebebändern ist die Klebstoffschicht mit einem Interliner abgedeckt. Des weiteren sind die Bänder, um eine Verfestigung des Velours und damit mehrere tausend Zyklen einer möglichen Wiederverschließbarkeit zu erreichen, mit einer starken Grundierung versehen, was nachteiligerweise dazu führt, daß diese Klebebänder sehr steif und schwer verarbeitbar sind. Versucht man diese Veloursklebebänder für eine Kabelsatzwicklung einzusetzen, so kommt es außerdem zu einer sogenannten Fähnchenbildung am Ende der Bewicklung. Deshalb ist eine Fixierung der Klebebandenden mit einem zusätzlichen Klebeband erforderlich, was erhöhte Herstellungskosten für den Kabelsatz verursacht.

Andererseits sind auch Velours-Klebebänder bekannt, die diese Nachteile nicht aufweisen und vorwiegend zum Polstern von Kabelsätzen eingesetzt werden. Diese Klebebänder sind jedoch nicht klettfähig, so daß sie nicht zur Befestigung an einem komplementären Klettverschlußteil verwendet werden können.

Der vorliegenden Erfindung liegt die Aufgabe zugrunde, ein Velours-Klebeband der eingangs genannten Art zu schaffen, das zu einer zeitsparenden Befestigung an einem komplementären Klettverschlußteil, insbesondere zur permanenten Befestigung von Kabelsätzen in einem Automobil, geeignet ist, jedoch eine leichtere Verarbeitung und weniger aufwendige Handhabung zuläßt als die bekannten Klebebänder.

Erfindungsgemäß wird dies dadurch erreicht, daß die Grundierungsschicht ein spezifisches Flächengewicht von weniger als 20 g/m² aufweist.

Durch die erfindungsgemäß vorgesehene Grundierung ist das Veloursmaterial extrem schmiegsam, so daß sich langgestrecktes Gut, insbesondere Kabelsätze einwandfrei bandagieren lassen. Die Schmiegsamkeit des erfindungsgemäßen Velours-Klebebandes ist dabei vergleichbar mit der Schmiegsamkeit eines ZW-Gewebes, PET-Gewebes oder eines PET-Nähvlieses. Aufgrund der Schmiegsamkeit des Trägermaterials ist vorteilhafterweise auch keine Fähnchenbildung bei der Kabelsatzwicklung zu beobachten.

In bevorzugter Ausführung kann die Grundierungsschicht dabei aus einem wasserundurchlässigen Material, wie beispielsweise aus einem Polyacrylat, einem Polyurethan oder aus einer Kombination dieser beiden Stoffe, bestehen, wodurch z.B. ein in einem Kraftfahrzeug befestigter Kabelsatz vor Flüssigkeiten oder der Einwirkung von Feuchtigkeit wirksam geschützt werden kann.

Weitere vorteilhafte Ausgestaltungsmerkmale der Erfindung sind in den Unteransprüchen sowie der folgenden Beschreibung enthalten.

Anhand zweier Ausführungsbeispiele soll im folgenden die Erfindung näher erläutert werden.

In beiden Ausführungen der Erfindung besteht ein Klettreißverschlußband aus zwei Bändern mit jeweils unterschiedlicher Oberflächengestaltung. Das eine Band, bei dem es sich um ein erfindungsgemäßes Velours-Klebeband handelt, ist auf seiner Oberseite web- oder wirktechnisch mit losen Schlaufen aus einem multifilen synthetischen Material versehen. Es ist zur Befestigung an dem anderen Band als einem komplementären Klettverschlußteil vorgesehen und dient zum Bandagieren von langgestrecktem Gut, wie insbesondere einem Kabelsatz für ein Automobil.

Das erfindungsgemäße Velours-Klebeband weist einen bandförmigen textilen Träger auf, auf dessen Oberseite die klettfähigen Schlaufen angeordnet sind. Als Materialien beider Ausführungen wird für den Träger dabei Polyamid, vorzugsweise ein Gemisch von PA 6 und PA 66, eingesetzt.

Auf der Unterseite des Trägers ist eine Grundierungsschicht und auf der Grundierungsschicht eine selbstklebende Schicht aufgetragen. Die Grundierungsschicht weist ein spezifisches Flächengewicht von weniger als etwa 20 g/m², insbesondere ein spezifisches Flächengewicht im Bereich von etwa 10-20 g/m², auf. Durch eine solche Grundierung wird einerseits eine ausreichende Verfestigung des Trägers erreicht, andererseits ist das erfindungsgmäße Velours-Klebeband - wie bereits erwähnt - extrem schmiegsam. Die Gundierung kann dabei aus einem Polyacrylat, einem Polyurethan oder aus einer Kombination dieser beiden Stoffe bestehen und durch Rollcoater oder Messerrakel aufgebracht sein.

Die selbstklebende Schicht auf der Rückseite des Trägers kann mit Vorteil aus einem druckempfindlichen Kleber auf Kautschuk-, Synthesekautschuk- oder Acrylatbasis bestehen. Derartige druckempfindliche Kleber können von ihrer Rezeptur her so eingestellt werden, daß eine definierte Abrollkraft von einer Bandrolle erreicht werden kann, d.h., es ist sowohl eine manuelle Verarbeitung als auch eine maschinelle Verarbeitung der Bänder möglich. Die Klebstoffgrammatur der selbstklebenden Schicht liegt bei den beiden Ausführungen der Erfindung mit Vorteil im Bereich von etwa 80 bis 140 g/m², vorzugsweise im Bereich von etwa 100 bis 120 g/m². Charakteristische Werte der Abrollkraft (Bestimmung nach PSTC-8) liegen dabei in einem Bereich von etwa 1 bis 8 N / 19 mm.

Das andere Band (komplementäres Klettverschlußteil) trägt auf seiner Oberseite viele kleine Hakenteile. Hierdurch entsteht bei dem Aufeinanderlegen beider Bänder eine klettenartige Haftwirkung. Für die Hakenteile gibt es unterschiedliche Ausführungsformen, so z.B. Haken, die aus monofilen Kettfäden gebildet sein können, Harpunen oder Pilzköpfe, wobei insbesondere mit den beiden letzteren hohe Haltekräfte an dem erfindungsgemäßen Velours-Klebeband erzielt werden können. Für das Hakenband kommen dabei bevorzugt Materialien wie Polyamide (z.B. Aramid), Polyolefine (z.B. Polyethylen, Polypropylen), Polyester und auch Elastomere zum Einsatz. Je nach dem Anwendungsfall des Bandes kann entweder eine vergleichsweise hohe Scherfestigkeit oder eine hohe Schälfestigkeit erforderlich sein, die jeweils durch die unterschiedlich Gestaltung der Hakenteile definiert eingestellt werden kann.

Die erste Ausführung der Erfindung bezieht sich auf ein Kabelwickelband für den Motorraum eines Automobils und weist die in der nachstehenden Tabelle 1 angegebenen Merkmale auf.

**Tabelle 1**

| Merkmal | Einheit | Wert |
|---|---|---|
| Klebertyp | - | Hotmeltacrylat |
| Klebstoffgrammatur | g/m² | 100 |
| Klettveloursmaterial | - | 100% PA |
| Flächengewicht | g/m² | 160 |
| Materialdicke | mm | 1,0 |
| Maschenreihen | 1 pro dm | 160 |
| Maschenstäbchen | 1 pro dm | 180 |
| Mechanische Eigenschaften: | | |
| Reißdehnung, längs | % | 35 |
| Reißfestigkeit, längs | N/cm | 120 |

Die mechanischen Eigenschaften wurden dabei in Anlehnung an DIN 53455 gemessen.

Die zweite Ausführung der Erfindung bezieht sich auf ein Kabelwickelband für den Innenraum eines Automobils und weist die in der Tabelle 2 angegebenen Merkmale auf.

**Tabelle 2**

| Merkmal | Einheit | Wert |
|---|---|---|
| Klebertyp | - | Synthesekautschuk |
| Klebstoffgrammatur | g/m² | 120 |
| Klettveloursmaterial | - | 100% PA |
| Flächengewicht | g/m² | 140 |
| Materialdicke | mm | 0,8 |
| Maschenreihen | 1 pro dm | 160 |
| Maschenstäbchen | 1 pro dm | 190 |
| Mechanische Eigenschaften: | | |
| Reißdehnung, längs | % | 45 |
| Reißfestigkeit, längs | N/cm | 150 |

Als textiler Träger wird mit Vorteil ein Wirkvelours eingesetzt. Ein solches Wirkvelours besteht aus einer sogenannten Maschenseite und aus einer glatten Rückseite. Die glatte Rückseite ist mit der Grundierungsschicht (Appretur) versehen, um eine Verfestigung des Wirkvelours zu erreichen.

Mit diesem äußerst schmiegsamen Veloursmaterial kann, u.a. durch gezielte Einstellung der Maschendichte, die sich multipikativ aus der Anzahl der Maschenstäbchen pro dm (Maschenstäbchendichte) und der Anzahl der Maschenreihen pro dm (Maschenreihendichte) ergibt, eine hohe Schälfestigkeit zu einem Hakenteil (z.B. besetzt mit Haken, Harpunen oder Pilzköpfen) erreicht werden. Eine solche hohe Schälfestigkeit ist z.B. für die permanente Befestigung von Kabelsätzen in einem Automobil erforderlich, da die Befestigung (Klett- aber auch Klebeverbindung) den bei Betrieb auftretenden Vibrationen und Stößen standhalten muß. Die Schälfestigkeit zum Hakenteil kann dabei mit Vorteil, insbesondere in einem Bereich von etwa 4 bis 12 N/cm (Prüfung nach AFERA 4001/DIN 40633) so eingestellt sein, daß circa 100 Zyklen der Wiederverschließbarkeit der Klettverbindung erreicht werden. Diese Anzahl ist für die genannten Anwendungsfälle (permanente Befestigung von Kabelsätzen) ausreichend.

Die Scherfestigkeit kann vorteilhafterweise Werte im Bereich von etwa 20 N/cm² bis 50 N/cm² annehmen, wenn sie nach folgender Methode ermittelt wird: Ein Pilzkopfband mit einer Fläche von 2 cm x 2 cm wird auf das Veloursband aufgebracht und anschließend abgeschert. Die Prüfung erfolgt auf einer Zugprüfmaschine mit einer Prüfgeschwindigkeit von 300 mm/min.

Die Maschendichte des Gewirks liegt bei den beiden Ausführungen in einem Bereich von etwa 28000 pro dm² bis 31000 pro dm². Sie kann in einem weiten Bereich variieren, wobei die Untergrenze etwa bei 19000 Maschen pro dm² und die Obergrenze etwa bei 38000 Maschen pro dm² liegen sollte.

Der Träger kann vorzugsweise aus einem Kettengewirk bestehen. Dabei ist es von Vorteil, wenn in dem Kettengewirk zwei Fadenketten, insbesondere zwei gleichlegige Ketten, vorzugsweise eine Oberkette mit Satinbindung und eine Unterkette mit Trikotbindung, verarbeitet sind. So können in herstellungstechnisch vorteilhafter Weise einerseits die verschlaufte Maschenseite und andererseits die glatte Rückseite des Wirkvelours in der gewünschten Qualität hergestellt werden.

Eine solche zweibarrige Kettenwirkware kann mit Vorteil auf einer Rechts-Links-Kettenwirkmaschine, Feinheit 25 gg (28 Nadeln auf einem englichen Zoll) hergestellt werden.

Das erfindungsgemäße Velours-Klebeband kann vorteilhafterweise als ein auf sich selbst gewickeltes Band hergestellt werden, wobei auf die Abdeckung der selbstklebenden Schicht durch einen Interliner verzichtet werden kann. Die Grundierungsschicht bewirkt dabei eine derartige Verfestigung des Gewirkes, daß die auf der Klebebandrückseite aufgebrachte selbstklebende Schicht nicht in der Lage ist, Maschen und/oder Stäbchen des Gewirks herauszuziehen.

Die Erfindung ist nicht auf die beschriebenen Ausführungsbeispiel beschränkt, sondern durch die Merkmalskombination des Anspruches 1. So werden zusammenfassend die in der Tabelle 3 angegebenen Merkmale als besonders geeignet für ein erfindungsgemäßes Velours-Klebeband angesehen.

**Tabelle 3**

| Merkmal | Einheit | Wert |
|---|---|---|
| Flächengewicht | g/m² | 120-220 |
| Materialdicke | mm | 0,8-2,0 |
| Maschenreihen | 1 pro dm | 120-180 |
| Maschenstäbchen | 1 pro dm | 160-210 |
| Mechanische Eigenschaften: | | |
| Reißdehnung, längs | % | 30-50 |
| Reißfestigkeit, längs | N/cm | 100-200 (Vorzugsbereich: 110-150) |

## Patentansprüche

1. Velours-Klebeband zur Befestigung an einem komplementären Klettverschlußteil, insbesondere zum Bandagieren von langgestrecktem Gut, wie einem Kabelsatz für ein Automobil, mit einem bandförmigen textilen Träger, der auf seiner Oberseite klettfähige Schlaufen aufweist und auf dessen Unterseite eine Grundierungsschicht und auf der Grundierungsschicht eine selbstklebende Schicht aufgetragen ist,
**dadurch gekennzeichnet, daß** die Grundierungsschicht ein spezifisches Flächengewicht von weniger als 20 g/m² aufweist.

2. Velours-Klebeband nach Anspruch 1,
**dadurch gekennzeichnet, daß** die Grundierungsschicht wasserundurchlässig ist.

3. Velours-Klebeband nach Anspruch 1 oder 2,
**dadurch gekennzeichnet, daß** die Grundierungsschicht aus einem Polyacrylat, einem Polyurethan oder aus einer Kombination dieser beiden Stoffe besteht.

4. Velours-Klebeband nach einem der Ansprüche 1 bis 3,
**dadurch gekennzeichnet, daß** die selbstklebende Schicht aus einem druckempfindlichen kautschuk- oder acrylathaltigen Haftklebstoff besteht.

5. Velours-Klebeband nach einem der Ansprüche 1 bis 4,
**dadurch gekennzeichnet, daß** die Klebstoffgrammatur der selbstklebenden Schicht im Bereich von etwa 80 bis 140 g/m², vorzugsweise im Bereich von etwa 100 bis 120 g/m², liegt.

6. Velours-Klebeband nach einem der Ansprüche 1 bis 5,
**dadurch gekennzeichnet, daß** die Materialdicke des Trägers im Bereich von etwa 0,8 bis 2,0 mm liegt.

7. Velours-Klebeband nach einem der Ansprüche 1 bis 6,
**dadurch gekennzeichnet, daß** der Träger eine Maschendichte im Bereich von etwa 19000 pro dm² bis 38000 pro dm², vorzugsweise im Bereich von etwa 28000 pro dm² bis 31000 pro dm², aufweist.

8. Velours-Klebeband nach einem der Ansprüche 1 bis 7,
**dadurch gekennzeichnet, daß** der Träger eine Maschenreihendichte im Bereich von etwa 120 pro dm bis 180 pro dm aufweist.

9. Velours-Klebeband nach einem der Ansprüche 1 bis 8,
**dadurch gekennzeichnet, daß** der Träger eine Maschenstäbchendichte im Bereich von etwa 160 pro dm bis 210 pro dm aufweist.

10. Velours-Klebeband nach einem der Ansprüche 1 bis 9,
**dadurch gekennzeichnet, daß** der Träger ein spezifisches Flächengewicht im Bereich von etwa 120-220 g/m², vorzugsweise im Bereich von etwa 140-180 g/m², aufweist.

11. Velours-Klebeband nach einem der Ansprüche 1 bis 10,
**dadurch gekennzeichnet, daß** der Träger aus Polyamid, vorzugsweise aus einem Gemisch von PA 6 und PA 66, besteht.

12. Velours-Klebeband nach einem der Ansprüche 1 bis 11,
**dadurch gekennzeichnet, daß** der Träger in Längsrichtung eine Reißdehnung im Bereich von etwa 30-50 Prozent aufweist.

13. Velours-Klebeband nach einem der Ansprüche 1 bis 12,
**dadurch gekennzeichnet, daß** der Träger in Längsrichtung eine Reißfestigkeit von etwa 100-200 N/cm, vorzugsweise von 110 bis 150 N/cm aufweist.

14. Velours-Klebeband nach einem der Ansprüche 1 bis 13,
**dadurch gekennzeichnet, daß** der Träger aus einem Kettengewirk besteht.

15. Velours-Klebeband nach Anspruch 14,
**dadurch gekennzeichnet, daß** in dem Kettengewirk zwei Fadenketten, insbesondere zwei gleichlegige Ketten, vorzugsweise eine Oberkette mit Satinbindung und eine Unterkette mit Trikotbindung, verarbeitet sind.

16. Velours-Klebeband nach Anspruch 14 oder 15,
**dadurch gekennzeichnet, daß** das Kettengewirk auf einer Rechts-Links-Kettenwirkmaschine einer Feinheit von 25 gg hergestellt ist.

17. Velours-Klebeband nach einem der Ansprüche 1 bis 16,
**dadurch gekennzeichnet, daß** eine Schälfestigkeit des Trägers zu dem komplementären Klettverschlußteil derart eingestellt ist, daß etwa 100 Zyklen der Wiederverschließbarkeit erreicht werden.

18. Velours-Klebeband nach einem der Ansprüche 1 bis 17,
**dadurch gekennzeichnet, daß** eine Schälfestigkeit des Trägers zu dem komplementären Klettverschlußteil bei einer Prüfung nach AFERA 4001/DIN 40633 in einem Bereich von etwa 4 N/cm bis 12 N/cm liegt.

19. Velours-Klebeband nach einem der Ansprüche 1 bis 18,
**dadurch gekennzeichnet, daß** eine Scherfestigkeit des Trägers zu dem komplementären Klettverschlußteil im Bereich von etwa 20 N/cm² bis 50 N/cm² liegt.

20. Velours-Klebeband nach einem der Ansprüche 1 bis 19,
**dadurch gekennzeichnet, daß** eine Rezeptur der selbstklebenden Schicht, derart ausgewählt ist, daß eine definierte Abrollkraft im Bereich von etwa 1 bis 8 N / 19 mm (Bestimmung nach PSTC-8) beim Abwickeln eines auf sich selbst gewickelten Bandes entsteht.

## Claims

1. Velour adhesive tape for attachment to a complementary hook and loop closure portion, especially for bandaging elongate good, such as an automotive cable harness, having a tape-shaped textile carrier having an upper surface comprising hookable loops and a lower surface comprising a priming layer and a self-adhesive layer applied atop the priming layer, **characterized in that** the priming layer has a specific basis weight of less than 20 g/m².

2. Velour adhesive tape according to Claim 1, **characterized in that** the priming layer is water impervious.

3. Velour adhesive tape according to Claim 1 or 2, **characterized in that** the priming layer consists of a polyacrylate, a polyurethane or of a combination thereof.

4. Velour adhesive tape according to any one of Claims 1 to 3, **characterized in that** the self-adhesive layer consists of a rubber- or acrylate-containing pressure-sensitive adhesive.

5. Velour adhesive tape according to any one of Claims 1 to 4, **characterized in that** the adhesive grammage of the self-adhesive layer is in the range from about 80 to 140 g/m² and preferably in the range from about 100 to 120 g/m².

6. Velour adhesive tape according to any one of Claims 1 to 5, **characterized in that** the material thickness of the carrier is in the range from about 0.8 to 2.0 mm.

7. Velour adhesive tape according to any one of Claims 1 to 6, **characterized in that** the carrier has a stitch density in the range from about 19 000 per dm² to 38 000 per dm² and preferably in the range from about 28 000 per dm² to 31 000 dm².

8. Velour adhesive tape according to any one of Claims 1 to 7, **characterized in that** the carrier has a course density in the range from about 120 per dm to 180 per dm.

9. Velour adhesive tape according to any one of Claims 1 to 8, **characterized in that** the carrier has a wale density in the range from about 160 per dm to 210 per dm.

10. Velour adhesive tape according to any one of Claims 1 to 9, **characterized in that** the carrier has a specific basis weight in the range of about 120-220 g/m² and preferably in the range of about 140-180 g/m².

11. Velour adhesive tape according to any one of Claims 1 to 10, **characterized in that** the carrier consists of polyamide and preferably of a mixture of N6 and N66.

12. Velour adhesive tape according to any one of Claims 1 to 11, **characterized in that** the carrier has a breaking extension in the range of about 30-50 per cent in the longitudinal direction.

13. Velour adhesive tape according to any one of Claims 1 to 12, **characterized in that** the carrier has a breaking strength of about 100-200 N/cm and preferably of 110 to 150 N/cm in the longitudinal direction.

14. Velour adhesive tape according to any one of Claims 1 to 13, **characterized in that** the carrier consists of a warp knit.

15. Velour adhesive tape according to Claim 14, **characterized in that** the warp knit comprises two warps, especially two identically lapping warps, preferably a front warp in a satin construction and a back warp in a tricot construction.

16. Velour adhesive tape according to Claim 14 or 15, **characterized in that** the warp knit was made on a 25 gauge plain fabric warp knitting machine.

17. Velour adhesive tape according to any one of Claims 1 to 16, **characterized in that** the peel adhesion of the carrier to the complementary hook and loop closure portion is such that about 100 cycles of recloseability are achieved.

18. Velour adhesive tape according to any one of Claims 1 to 17, **characterized in that** the peel adhesion of the carrier to the complementary hook and loop closure portion is in the range from about 4 N/cm to 12 N/cm when tested to AFERA 4001/DIN 40633.

19. Velour adhesive tape according to any one of Claims 1 to 18, **characterized in that** the shear adhesion of the carrier to the complementary hook and loop closure portion is in the range from about 20 N/cm² to 50 N/cm².

20. Velour adhesive tape according to any one of Claims 1 to 19, **characterized in that** the self-adhesive layer is formulated such that unwinding a self-wound tape generates a defined release peel in the range from about 1 to 8 N/19 mm (as determined to PSTC-8).

## Revendications

1. Bande adhésive en velours, pour fixation à une pièce complémentaire de fermeture auto-agrippante, en particulier pour enrubanner un objet de grande longueur, tel qu'un faisceau de câbles pour une automobile, comportant un support textile en forme de bande, qui sur sa face supérieure comporte des boucles agrippantes, une couche de fond étant appliquée sur sa face inférieure, et une couche auto-adhésive étant appliquée sur la couche de fond, **caractérisée en ce que** la couche de fond a une masse surfacique inférieure à 20 g/m².

2. Bande adhésive en velours selon la revendication 1, **caractérisée en ce que** la couche de fond est imperméable à l'eau.

3. Bande adhésive en velours selon la revendication 1 ou 2, **caractérisée en ce que** la couche de fond est constituée d'un polyacrylate, d'un polyuréthanne ou d'une combinaison de ces deux substances.

4. Bande adhésive en velours selon l'une des revendications 1 à 3, **caractérisée en ce que** la couche auto-adhésive est constituée d'un adhésif de contact, sensible à la pression, contenant du caoutchouc ou un acrylate.

5. Bande adhésive en velours selon l'une des revendications 1 à 4, **caractérisée en ce que** la masse surfacique de l'adhésif de la couche auto-adhésive est comprise dans la plage d'environ 80 à 140 g/m² et de préférence d'environ 100 à 120 g/m².

6. Bande adhésive en velours selon l'une des revendications 1 à 5, **caractérisée en ce que** l'épaisseur de matériau du support est comprise dans la plage d'environ 0,8 à 2,0 mm.

7. Bande adhésive en velours selon l'une des revendications 1 à 6, **caractérisée en ce que** le support présente une densité de mailles comprise dans la plage d'environ 19 000 à 38 000 par dm² et de préférence d'environ 28 000 à 31 000 par dm².

8. Bande adhésive en velours selon l'une des revendications 1 à 7, **caractérisée en ce que** le support présente une densité des rangées de mailles comprise dans la plage d'environ 120 à 180 par dm.

9. Bande adhésive en velours selon l'une des revendications 1 à 8, **caractérisée en ce que** le support présente une densité des colonnes de mailles comprise dans la plage d'environ 160 à 210 par dm.

10. Bande adhésive en velours selon l'une des revendications 1 à 9, **caractérisée en ce que** le support présente une masse surfacique comprise dans la plage d'environ 120 à 220 g/m² et de préférence d'environ 140 à 180 g/m².

11. Bande adhésive en velours selon l'une des revendications 1 à 10, **caractérisée en ce que** le support est constitué d'un polyamide, de préférence d'un mélange de PA 6 et de PA 66.

12. Bande adhésive en velours selon l'une des revendications 1 à 11, **caractérisée en ce que** le support présente dans la direction longitudinale un allongement à la rupture compris dans la plage d'environ 30 à 50 %.

13. Bande adhésive en velours selon l'une des revendications 1 à 12, **caractérisée en ce que** le support présente dans la direction longitudinale une résistance à la traction d'environ 100 à 200 N/cm et de préférence de 110 à 150 N/cm.

14. Bande adhésive en velours selon l'une des revendications 1 à 13, **caractérisée en ce que** le support est constitué d'un tricot chaîne.

15. Bande adhésive en velours selon la revendication 14, **caractérisée en ce que** deux chaînes de fils, en particulier deux chaînes à structure identique, de préférence une chaîne de poil à armure satin et une chaîne de fond à armure tricot, sont incorporées dans le tricot chaîne.

16. Bande adhésive en velours selon la revendication 14 ou 15, **caractérisée en ce que** le tricot chaîne est fabriqué sur une machine à tricoter en chaîne droite-gauche, ayant une finesse de 25 gg.

17. Bande adhésive en velours selon l'une des revendications 1 à 16, **caractérisée en ce que** la résistance du support au pelage par rapport à la pièce de fermeture agrippante complémentaire est ajustée de façon à arriver à environ 100 cycles de refermabilité.

18. Bande adhésive en velours selon l'une des revendications 1 à 17, **caractérisée en ce qu'**une résistance du support au pelage par rapport à la pièce de fermeture agrippante complémentaire est, lors d'un essai selon AFERA 4001/DIN 40633, comprise dans la plage d'environ 4 à 12 N/cm.

19. Bande adhésive en velours selon l'une des revendications 1 à 18, **caractérisée en ce qu'**une résistance au cisaillement du support par rapport à la pièce de fermeture agrippante complémentaire est comprise dans la plage d'environ 20 à 50 N/cm².

20. Bande adhésive en velours selon l'une des revendications 1 à 19, **caractérisée en ce qu'**une formulation de la couche auto-adhésive est sélectionnée de façon qu'il se crée une force de déroulement parfaitement définie, comprise dans la plage d'environ 1 à 8 N/19 mm (détermination selon PSTC-8) après déroulement d'une bande enroulée sur elle-même.
